# EUROPÄISCHE PATENTANMELDUNG

(11) **EP 2 497 987 A1**
(43) Veröffentlichungstag der Anmeldung: **12.09.2012**
(21) Anmeldenummer: 12158038.5
(22) Anmeldetag: 05.03.2012
(51) Int. Cl.: F16L 11/115

(54) **Flexible Dampfleitung insbesondere für solarthermische Kraftwerke**

(30) Priorität: 10.03.2011 DE 102011005344
(71) Anmelder: Siemens Aktiengesellschaft, 80333 München (DE)
(72) Erfinder: Haje, Detlef, 02828 Görlitz (DE); Riebisch, Katja, 01917 Kamenz (DE)

(57) **Zusammenfassung**

Die Erfindung betrifft eine Dampfleitung (14) für ein solarthermisches Kraftwerk, mit einer schlauchförmigen Ausbildung in einer Richtung, die eine Längsrichtung (L) definiert, und einer Wand (24), die zumindest abschnittsweise in der Längsrichtung (L) und einer von der Längsrichtung (L) abweichenden Richtung verformbar ist.

## Beschreibung

Die Erfindung betrifft eine flexible Dampfleitung insbesondere für solarthermische Kraftwerke.

Ein Sonnenwärmekraftwerk oder Solarwärmekraftwerk ist ein Solarkraftwerk, das die Wärme der Sonne über Absorber als primäre Energiequelle verwendet. Daher sind daneben die Bezeichnungen solarthermisches Kraftwerk oder thermisches Solarkraftwerk üblich. Es gibt verschiedene Konzepte für die Nutzung der Sonnenwärme zur Energiegewinnung, die sich in zwei Kategorien einteilen lassen: Kraftwerke, welche die Direktstrahlung der Sonne mit Reflektoren auf einen Solarabsorber bündeln, und solche, die ohne konzentrierende Reflektoren arbeiten und die gesamte Globalstrahlung (Direkt- und Diffusstrahlung) nutzbar machen.

Solarthermische Kraftwerke mit Bündelung der Direktstrahlung verwenden fokussierende Reflektorflächen, um das einfallende Sonnenlicht auf den Absorber zu bündeln. Die Reflektoren oder der Absorber werden der Sonne nachgeführt. Solarfarmkraftwerke sammeln die Wärme in vielen über die Fläche verteilten Absorbern, während in Solarturmkraftwerken und Paraboloidkraftwerken die Strahlung der Sonne mit Punktkonzentratoren auf einen Brennpunkt gebündelt wird.
Wasserdampferzeugende Systeme eignen sich zur Unterstützung und damit Brennstoffeinsparung in konventionellen Dampfkraftwerken.

Das Kollektorfeld eines Solarfarmkraftwerkes besteht aus vielen parallel geschalteten Parabolrinnen- oder Fresnel-Kollektoren, so genannten Linienkonzentratoren. Die Zusammenschaltung von Paraboloidanlagen zu einem großen Kollektorfeld ist möglich, gegenüber Linienkonzentratoren jedoch sehr aufwändig. Im Kollektorfeld wird ein Wärmeträgermedium erhitzt, entweder Thermoöl, geschmolzenes Salz oder Wasser bzw. Wasserdampf. Bei Thermoölanlagen sind Temperaturen von bis zu 390 °C erreichbar, die in einem Wärmeübertrager zur Dampferzeugung genutzt werden. Die Direktdampferzeugung kommt ohne solche Wärmeübertrager aus, da der überhitzte Wasserdampf direkt in den Absorberrohren erzeugt wird. Damit sind Temperaturen von über 500 °C möglich. Der Wasserdampf wird anschließend wie in einem üblichen Dampfkraftwerk einer zentral angeordneten Dampfturbine zugeführt, die an einen Generator gekoppelt ist.

Parabolrinnenkollektoren bestehen aus gewölbten Spiegeln, die das Sonnenlicht auf ein in der Brennlinie verlaufendes Absorberrohr bündeln. Die Länge solcher Kollektoren liegt je nach Bautyp üblicherweise zwischen 20 und 150 Metern. In den Absorberrohren wird die konzentrierte Sonnenstrahlung in Wärme umgesetzt und an ein zirkulierendes Wärmeträgermedium abgegeben. Die Parabolrinnen werden der Sonne nachgeführt. Sie sind deshalb in Nord-Süd-Richtung angeordnet und werden der Sonne im Tagesverlauf von Ost nach West nachgeführt.

Eine Alternative zu Parabolrinnen sind so genannte Fresnel-Spiegel-Kollektoren. Bei ihnen wird das Sonnenlicht über mehrere zu ebener Erde angeordneten parallele, ungewölbte Spiegelstreifen (nach dem Prinzip einer Fresnel-Linse) auf ein Absorberrohr gebündelt. Die Streifen werden einachsig nachgeführt. Ein zusätzlicher Sekundärspiegel hinter dem Rohr lenkt die Strahlung auf die Brennlinie. Diese Bauweise verbindet die Funktionsprinzipien von Parabolrinnenkollektoren und Turmkraftwerken miteinander, wobei sowohl auf gewölbte Spiegel als auch auf mehrachsige Sonnenstandsnachführungen verzichtet wird und der modulare Aufbau erhalten bleibt. Das Absorberrohr wird im Gegensatz zu den meisten Parabolrinnenkonstruktionen nicht bewegt. So können sehr lange Kollektoren gebaut werden, die durch fehlende Rohrbögen und bewegliche Leitungsabschnitte geringe Strömungswiderstände für das Wärmeträgermedium aufweisen.

Die zuerst genannten Kraftwerkstypen weisen keine flexiblen Dampfleitungen auf. Im Fall der Parabolrinnenkraftwerke werden die beweglichen Leitungsabschnitte der Wärmeträgerleitungen üblicherweise durch Gelenke in den Leitungen realisiert. Die Leitungen können allerdings nur mit begrenztem Druck unterhalb von 10 bar betrieben werden, wodurch aufgrund des geringen Druckniveaus eine direkte Dampferzeugung unattraktiv wird. Bei Fresnel-Anlagen ist die ausführbare Länge der Absorber-Rohre begrenzt durch die thermische Dehnung der Rohre. In einem Paraboloidkraftwerk konzentriert ein zweiachsig der Sonne nachgeführter Parabolspiegel die Sonnenenergie direkt auf einen Absorber, der im Brennpunkt des Spiegels installiert ist. Das Arbeitsgas (Helium, Luft) darin erhitzt sich auf bis zu 900 °C und treibt einen Stirlingmotor oder eine Gasturbine neben dem Absorber an. Der Stirlingmotor setzt die thermische Energie direkt in mechanische Arbeit um. Aufgrund der hohen auszugleichenden Verschiebungen war eine flexible Verlegung von Dampfleitungen nicht möglich.

Für alle genannten Anlagentypen ist eine flexible Dampfleitung wünschenswert.

Die Aufgabe der Erfindung ist es, eine flexible Dampfleitung für solarthermische Kraftwerke anzugeben, die auch mit einem hohen Innendruck, d.h. Drücken oberhalb von 10 bar, bevorzugt oberhalb von 80 bar, betrieben werden kann.

Diese Aufgabe wird durch eine Dampfleitung für solarthermische Kraftwerke mit den Merkmalen gemäß dem unabhängigen Patentanspruch 1 und durch eine Kollektoranlage mit einer Dampfleitung mit den Merkmalen gemäß Patentanspruch 14 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Dampfleitung beschrieben sind, selbstverständlich auch im Zusammenhang mit der erfindungsgemäßen Kollektoranlage und jeweils umgekehrt, so dass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch eine Dampfleitung für ein solarthermisches Kraftwerk gelöst, die schlauchförmig in einer eine Längsrichtung definierenden Richtung ausgebildet ist und die eine Wand aufweist, die zumindest abschnittsweise in der Längsrichtung und einer von der Längsrichtung abweichenden Richtung verformbar ist. Dadurch lassen sich Winkelabweichungen und Längs- bzw. Querverschiebungen ausgleichen.

Bei der Dampfleitung können auf einer Außenseite der Wand Halteelemente mit daran angebrachtem Stützgewebe vorgesehen sein. Dadurch kann eine instabile Verformung, z.B. in Form eines Durchhängens der Dampfleitung, vermieden werden.

Die Halteelemente können mit der Wand integral ausgebildet sein. Vorzugsweise sind die Halteelemente mit der Wand monolithisch hergestellt. Dadurch ist die Dampfleitung insgesamt stabiler.

Die Halteelemente können in Form von Vorsprüngen ausgebildet sein, die sich auf der Außenseite der Wand befinden. Dadurch lässt sich das stützende Gewebe besonders einfach anbringen.

Die Vorsprünge können von der Wand nach außen in einer Richtung vorstehen, die senkrecht oder im Wesentlichen senkrecht zu der Längsrichtung ist. Dadurch kann das stützende Gewebe besonders rutschfest angebracht werden.

Die Wand und die Halteelemente können so ausgebildet sein, dass sie in der Längsrichtung gesehen eine Wellenform mit Wellenbergen und Wellentälern bilden, wobei zumindest in den Wellentälern das stützendes Gewebe so angebracht ist, dass es eine Ausdehnung der Leitung zumindest in der Längsrichtung begrenzt. Dadurch wird nur eine geringe Ausdehnung der Dampfleitung in der Längsrichtung zugelassen.

Das stützende Gewebe kann mit Stützringen versehen sein, die an den Halteelementen so befestigt sind, dass sie in den Wellentälern angeordnet sind. Dadurch lässt sich eine Ausdehnung der Dampfleitung in der Längsrichtung besonders gut begrenzen. Ferner wird dadurch verhindert, dass bei den vorherrschenden Innendrücken von teilweise über 80 bar die Wand von innen geglättet wird, was den Kompensationseffekt für die Ausdehnung verhindern würde.

Die Stützringe können so in den Wellentälern angeordnet sein, dass sie die Wand in der Längsrichtung fixieren. Dadurch wird eine Ausdehnung der Dampfleitung in der Längsrichtung stark begrenzt, aber eine Biegung derselben wird zugelassen.

Erstrecken sich die Halteelemente vollständig in einer Umfangsrichtung um die Wand, kann das stützende Gewebe an besonders vielen Stellen angebracht werden und so die Dampfleitung stabilisieren.

Vorteilhafterweise kann die Dampfleistung dazu ausgebildet sein, mit einer feststehenden Dampfleitung eines solarthermischen Kraftwerks verbunden zu werden.

Vorteilhafterweise kann das Gewebe insbesondere so ausgebildet sein, dass die das Gewebe bildenden Zugelemente, wie beispielsweise Seile, Drähte oder Stäbe, in einer von der Längsrichtung abweichenden Richtung angeordnet sind, d.h. in einer Seitenansicht der Dampfleitung schräg verlaufen, wodurch eine gewisse Flexibilität des Gewebes erreicht wird. Die Zugelemente können dabei bezüglich eines Querschnitts der Dampfleitung an unterschiedlichen Winkelpositionen befestigt sein. Um eine Torsion der Dampfleitung zu verhindern bzw. zu begrenzen, können die Zugelemente auch derart angeordnet werden, dass ein Teil von ihnen in einer positiven Richtung um die Längsrichtung gewunden ist, während ein anderer Teil in einer negativen Richtung um die Längsrichtung gewunden ist.

Die Erfindung und ihre Weiterbildungen sowie deren Vorteile werden nachfolgend anhand von Zeichnungen näher erläutert. Es zeigen jeweils schematisch:
- Figur 1: eine schematische Darstellung einer Parabolrinnenkollektoranlage,
- Figur 2: eine schematische Darstellung einer Paraboloidkollektoranlage, und
- Figur 3: in einer Schnittdarstellung in Längsrichtung ein vergrößertes Detail einer Dampfleitung.

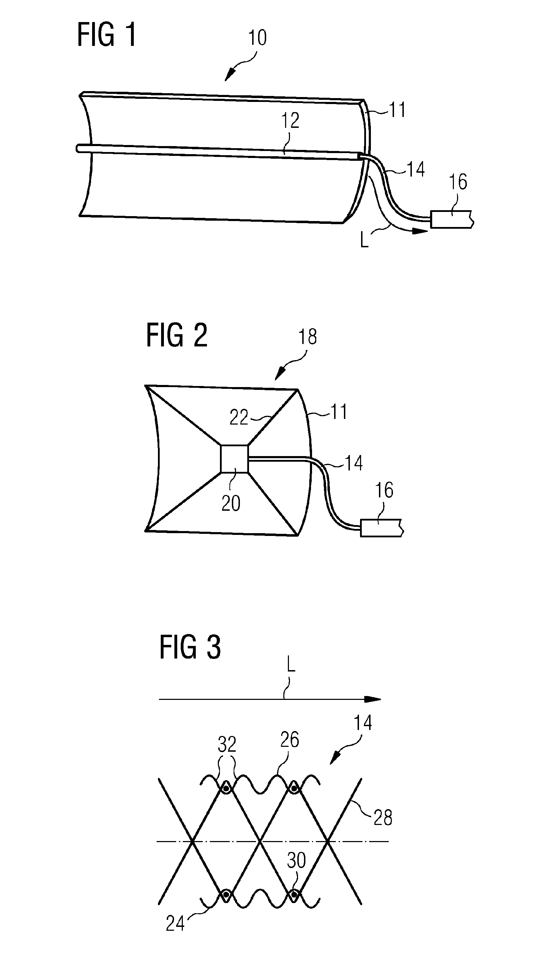

Elemente mit gleicher Funktion und Wirkungsweise sind in den Figuren 1 bis 3 jeweils mit denselben Bezugszeichen versehen.

Fig. 1 zeigt eine schematische Darstellung einer Parabolrinnenkollektoranlage 10 für ein nicht gezeigtes solarthermisches Kraftwerk. Die Parabolrinnenkollektoranlage 10 weist Kollektoren 11 und in dem Brennbereich der Kollektoren 11 ein Absorberrohr 12 auf, an das eine flexible Dampfleitung 14 angeschlossen ist. Die Dampfleitung 14 ist für einen Direktverdampfungsbetrieb geeignet und erstreckt sich in einer Längsrichtung, die durch einen Pfeil L angegeben ist. Insbesondere erstreckt sich das Absorberrohr 12 über die vollständige Länge der Parabolrinnenkollektoranlage 10 und ist mittels der flexiblen Dampfleitung 14 mit einer feststehenden Dampfleitung 16 des solarthermischen Kraftwerks verbunden. Der Betrieb eines solarthermischen Kraftwerks mit Direktverdampfungsbetrieb ist hinreichend bekannt und wird daher hierin nicht beschrieben. Die erfindungsgemäße Dampfleitung 14 eignet sich für den Direktverdampfungsbetrieb, so dass diese beispielsweise Wasserdampf führen kann, als auch andere bekannte Betriebsverfahren, so dass diese beispielsweise Thermoöl führen kann.

Fig. 2 zeigt einen ähnlichen Aufbau für eine Paraboloidkollektoranlage 18, bei der ein Absorber 20 auf Stützstreben 22 im Brennpunkt der Paraboloidkollektoranlage 18 angeordnet ist. In dem Absorber 20 ist die Dampfleitung 14 angebracht und ist bis zur feststehenden Dampfleitung 16 des solarthermischen Kraftwerks geführt.

Wie Fig. 3 zeigt, ist die Dampfleitung 14 schlauchförmig ausgebildet und weist eine Wand 24 auf. Die Wand 24 besteht vorteilhafterweise aus hochtemperaturfestem Stahl, z.B. chromlegierter Stahl oder Stahl mit einer Nickelbasislegierung. Auf einer Außenseite der Wand 24 sind Halteelemente 26 vorgesehen, die mit der Wand 24 integral ausgebildet sind, d.h. die Wand 24 und die Halteelemente 26 sind monolithisch bzw. aus einem Werkstück gefertigt. Die Halteelemente 26 und die Wand 24 sind insbesondere wellenförmig ausgebildet, wobei die Halteelemente 26 Vorsprünge in der Form von Wellenbergen bilden, die im Wesentlichen senkrecht nach außen von der Wand 24 vorstehen, und die eigentliche Wand 24 Wellentäler bildet. Dadurch ist die Wand 24 in der Längsrichtung verformbar und biegbar, das heißt in einer Richtung, die sich von der Längsrichtung unterscheidet, beweglich. Die Halteelemente 26 sind zueinander gleichmäßig in der Längsrichtung beabstandet und erstrecken sich vollständig in Umfangsrichtung um die Wand 24.

Ein stützendes Gewebe 28, das schlauchförmig ausgebildet und mit Stützringen 30 verbunden ist, ist so um die Wand 24 und an den Halteelementen 26 angebracht, dass die Stützringe 30 in den Wellentälern zwischen den Halteelementen 26 angeordnet sind. Das Gewebe 28 ist eine Art querverstrebtes Drahtgeflecht bzw. kann eine Anordnung aus querverstrebten Zugelementen sein. Als Material für das Gewebe eignen sich hochtemperaturfeste Stähle. Das Gewebe 28 umgibt die Wand 24 der Dampfleitung 14 vollständig in Umfangs- und Längsrichtung. Dadurch ist die Dampfleitung 14 in der Form eines Kompensators ausgebildet, der begrenzte Ausdehnungen der Dampfleitung 14 bzw. der Wand 24 in der Längsrichtung L erlaubt. Eine Biegung der Wand 24 ist dadurch ebenfalls möglich. Insbesondere sorgt das Gewebe 28 dafür, dass es die Stützringe 30 in der Längsrichtung fixiert hält. Dadurch, dass die Halteelemente 26 als Wellenberge ausgebildet sind, können sich die Stützringe 30 an den Halteelementen 26 abstützen und haben eine relative große Auflagefläche 32 in Umfangsrichtung um die Wand 24, wodurch die Wand 24 besonders gut in Längsrichtung fixiert werden kann. Ferner verhindern die Stützringe 30, dass bei den während des Betriebs herrschenden Drücken im Inneren der Leitung von mehr als 10 bar und teilweise über 80 bar die Wellenform von innen geglättet wird, d.h. die Form der Leitung würde sich ansonsten von einem Wellrohr in ein herkömmliches Rohr mit glatter Wand verformen. Das Gewebe 28 kann mit den Stützringen 30 durch Verweben, Verknoten, Verlaschen oder dergleichen verbunden sein. Wichtig ist, dass das Gewebe 28 dafür sorgt, dass die Stützringe nicht verrutschen können. Dies kann beispielsweise dadurch geschehen, dass das Gewebe 28 außen um die Stützringe gespannt ist. Die Stützringe 30 müssen nicht an jedem Halteelement 26 befestigt sein. Die Wand 24 und die Halteelemente 26 können separate Bauteile sein. Das Gewebe 28 kann insbesondere so ausgebildet sein, dass die das Gewebe bildenden Zugelemente, wie beispielsweise Seile, Drähte oder Stäbe, in einer von der Längsrichtung abweichenden Richtung angeordnet sind, d.h. in einer Seitenansicht der Dampfleitung 14 schräg verlaufen. Hierdurch wird eine gewisse Flexibilität des Gewebes erreicht. Die Zugelemente können bezüglich eines Querschnitts der Dampfleitung 14 an unterschiedlichen Winkelpositionen befestigt sein. Um eine Torsion der Dampfleitung 14 zu verhindern bzw. zu begrenzen, können die Zugelemente derart angeordnet werden, dass ein Teil von ihnen in einer positiven Richtung um die Längsrichtung gewunden ist, während ein anderer Teil in einer negativen Richtung um die Längsrichtung gewunden ist. Die Zugelemente verlaufen dann wie zwei entgegengesetzt gewundene Spiralen entlang der Dampfleitung 14.

Durch die besondere Kombination der Struktur der Wand 24 und des Stützgewebes 28 kann die Dampfleitung 14 auch über große Längen flexibel und mit begrenzten Längsverschiebungen ausgebildet werden. Dies ist insbesondere bei Anlagen mit direkter Dampferzeugung wichtig, da dort sehr hohe Temperaturen und Innendrücke herrschen. Dadurch kann die erfindungsgemäße Dampfleitung Anwendung in solarthermischen Kraftwerken mit großen Kollektorflächen und Rohrlängen finden, bei denen prinzipiell große thermisch bedingte Verschiebungen auftreten. Insbesondere ist die erfindungsgemäße Dampfleitung geeignet, in Anlagen eingesetzt zu werden, die ein Nachführen der Reflektoreinheiten und somit auch eine Bewegung der Dampfleitung erfordern. Die Anwendung der Dampfleitung 14 ist nicht auf solarthermische Kraftwerke begrenzt, sondern kann überall dort eingesetzt werden, wo die oben geschilderte Flexibilität zum Ausgleichen thermisch bedingter Längenunterschiede erwünscht ist.

## Patentansprüche

1. Dampfleitung (14), insbesondere für ein solarthermisches Kraftwerk, mit
einer schlauchförmigen Ausbildung in einer Richtung, die eine Längsrichtung (L) definiert, und einer Wand (24), die zumindest abschnittsweise in der Längsrichtung (L) und einer von der Längsrichtung (L) abweichenden Richtung verformbar ist.

2. Dampfleitung (14) nach Anspruch 1, **dadurch gekennzeichnet, dass** auf einer Außenseite der Wand (24) Halteelemente (26) mit daran angebrachtem stützendem Gewebe (28) vorgesehen sind.

3. Dampfleitung (14) nach Anspruch 2, **dadurch gekennzeichnet, dass** die Halteelemente (26) mit der Wand (24) integral ausgebildet sind.

4. Dampfleitung (14) nach Anspruch 2 oder 3, **dadurch gekennzeichnet, dass** die Halteelemente (26) in Form von Vorsprüngen ausgebildet sind, die sich auf der Außenseite der Wand (24) befinden.

5. Dampfleitung (14) nach Anspruch 4, **dadurch gekennzeichnet, dass** die Vorsprünge (26) von der Wand (24) nach außen in einer Richtung vorstehen, die senkrecht oder im Wesentlichen senkrecht zu der Längsrichtung (L) der Dampfleitung (14) ist.

6. Dampfleitung (14) nach mindestens einem der vorhergehenden Ansprüche 2 bis 5, **dadurch gekennzeichnet, dass** die Wand (24) und die Halteelemente (26) so ausgebildet sind, dass sie in der Längsrichtung (L) gesehen eine Wellenform mit Wellenbergen und Wellentälern bilden, wobei zumindest in den Wellentälern das stützende Gewebe (28) so angebracht ist, dass es eine Ausdehnung der Leitung (14) zumindest in der Längsrichtung (L) begrenzt.

7. Dampfleitung (14) nach Anspruch 6, **dadurch gekennzeichnet, dass** das stützende Gewebe (28) mit Stützringen (30) versehen ist, die an den Halteelementen (26) so befestigt sind, dass sie in den Wellentälern angeordnet sind.

8. Dampfleitung (14) nach Anspruch 7, **dadurch gekennzeichnet, dass** die Stützringe (30) so in den Wellentälern angeordnet sind, dass sie die Wand (24) in der Längsrichtung (L) fixieren.

9. Dampfleitung (14) nach zumindest einem der vorhergehenden Ansprüche 2 bis 8, **dadurch gekennzeichnet, dass** sich die Halteelemente (26) vollständig in einer Umfangsrichtung um die Wand (24) erstrecken.

10. Dampfleitung (14) nach zumindest einem der vorhergehenden Ansprüche 2 bis 9, **dadurch gekennzeichnet, dass** das Gewebe (28) so ausgebildet ist, dass die das Gewebe bildenden Zugelemente in einer von der Längsrichtung (L) abweichenden Richtung angeordnet sind.

11. Dampfleitung (14) nach zumindest einem der vorhergehenden Ansprüche 2 bis 10, **dadurch gekennzeichnet, dass** die das Gewebe (28) bildenden Zugelemente bezüglich eines Querschnitts der Dampfleitung (14) an unterschiedlichen Winkelpositionen befestigt sind.

12. Dampfleitung (14) nach zumindest einem der vorhergehenden Ansprüche 2 bis 11, **dadurch gekennzeichnet, dass** die das Gewebe (28) bildenden Zugelemente derart angeordnet sind, dass ein Teil der Zugelemente in einer positiven Richtung um die Längsrichtung (L) gewunden ist, während ein anderer Teil in einer negativen Richtung um die Längsrichtung (L) gewunden ist.

13. Dampfleitung (14) nach zumindest einem der vorhergehenden Ansprüche 1 bis 12, die dazu ausgebildet ist, mit einer feststehenden Dampfleitung (16) eines solarthermischen Kraftwerks verbunden zu werden.

14. Kollektoranlage für ein solarthermisches Kraftwerk, mit Kollektoren (11) und einer Dampfleitung (14) nach zumindest einem der vorhergehenden Ansprüche 1 bis 13.
